# EUROPÄISCHE PATENTSCHRIFT

(11) **EP 1 297 256 B1**
(45) Veröffentlichungstag und Bekanntmachung des Hinweises auf die Patenterteilung: **18.07.2007**
(21) Anmeldenummer: 01953815.6
(22) Anmeldetag: 27.06.2001
(51) Int. Cl.: F04B 27/18, F04B 27/10

(54) **SICHERHEITSEINRICHTUNG FÜR KLIMAKOMPRESSOR**
SAFETY DEVICE FOR AN AIR-CONDITIONING COMPRESSOR
DISPOSITIF DE SECURITE POUR COMPRESSEUR DE CONDITIONNEMENT D'AIR

(30) Priorität: 06.07.2000 DE 10032905
(43) Veröffentlichungstag der Anmeldung: 02.04.2003
(73) Patentinhaber: ixetic MAC GmbH, 61352 Bad Homburg (DE); Behr GmbH & Co. KG, 70469 Stuttgart (DE)
(72) Erfinder: WEBER, Georg, 63071 Offenbach (DE); SICKELMANN, Michael, 70188 Stuttgart (DE); SCHÄFER, Tilo, 55566 Danbach (DE); WALTER, Christoph, 70469 Stuttgart (DE); KRAUSS, Hans-Joachim, 70567 Stuttgart (DE); RAISER, Harald, 72336 Balingen (DE); OBRIST, Frank, A-6850 Dornbirn (AT)
(86) Internationale Anmeldenummer: PCT/DE2001/002388
(87) Internationale Veröffentlichungsnummer: WO 2002/002940

(56) Entgegenhaltungen:
- EP-A- 0 953 765
- EP-A- 0 992 746
- EP-A- 0 992 747
- EP-A- 1 004 834
- EP-A- 1 014 016
- US-A- 5 332 365
- US-A- 5 588 807

## Beschreibung

Die Erfindung betrifft eine Sicherheitseinrichtung für die Druckbegrenzung im Entladedruckbereich, das heißt im Hochdruckbereich eines hubvariablen bzw. verdrängungsvariablen Kompressors, bei dem die Neigung der Taumelscheibe oder der Schrägscheibe durch die Differenz zwischen dem Hochdruck im Entladedruckbereich und dem Druck im Triebraum variiert werden kann, gegebenenfalls auch durch die Differenz zwischen dem Druck im Triebraum und dem Druck im Saugbereich des Klimakompressors. Deswegen besitzen derartige Klimakompressoren eine Zufuhrverbindung zwischen der Auslaßkammer des Kompressors im Entladedruckbereich und dem Triebraumdruckbereich. In dieser Zufuhrverbindung kann ein Ventil und gegebenenfalls eine Bypassdrossel angeordnet sein, die die Druckdifferenz zwischen Entladedruckbereich und Triebraumdruckbereich beeinflussen kann. Zusätzlich können derartige Klimakompressoren eine Verbindung zwischen dem Triebraumdruckbereich und dem Saugdruckbereich aufweisen, in der gegebenenfalls auch ein Ventil oder eine Konstantdrossel angeordnet sein kann, wodurch die Druckdifferenz zwischen Triebraumdruck und Saugraumdruck beeinflußbar ist. Ein typischer verdrängungsvariabler Kompressor, der zum Beispiel in Kraftfahrzeugen für deren Klimaanlagen verwendet wird, hat einen Triebraum, der innerhalb eines Gehäuses vorgesehen ist und die Triebwerkselemente für die Förderung des Kühlmittels enthält. Eine Antriebswelle ist drehbar in Gehäuseelementen gelagert. Ein Teil des Gehäuses enthält einen Zylinderblock, durch den sich eine Vielzahl von Zylinderbohrungen erstrecken. Kolben sind hin- und herbewegbar in jeder Zylinderbohrung untergebracht. Auf der Antriebswelle ist eine Schrägscheibe oder Taumelscheibe vorgesehen, die sich mit der Antriebswelle dreht und derart gelagert ist, daß sie in Bezug zur Antriebswelle während der Umdrehungen in ihrer Neigung verstellt werden kann. Die Kolben sind mit entsprechenden Getriebeelementen an die Taumelscheibe oder Schrägscheibe angekoppelt. Der Hub der Kolben während einer Hin- und Herbewegung innerhalb der zugehörigen Zylinderbohrungen wird durch die Neigung der Taumelscheibe oder Schrägscheibe bestimmt.

Die Neigung der Taumelscheibe oder Schrägscheibe wird durch Einstellen des Druckes im Triebraum in Relation zu den auf den Kolben wirkenden Drücken im Entladedruckbereich, das heißt im Hochdruckbereich, und im Saugbereich, das heißt im Niederdruckbereich, gesteuert. In anderen Worten ausgedrückt, kann die Differenz zwischen den Drücken, die auf die beiden Enden jedes Kolbens einwirken, durch Ändern des Druckes im Triebraumdruckbereich verändert werden. Dies ändert die Neigung der Taumelscheibe oder der Schrägscheibe und verändert das Verdrängungsvolumen des Kompressors. Darüber hinaus sind in den Verbindungskanälen zwischen diesen Druckbereichen Drosseleinrichtungen oder Ventileinrichtungen vorgesehen, mit welchen der Druck im Triebraum in Relation zum Entladedruck und zum Ansaugdruck geregelt werden kann. Gegebenenfalls sind diese Ventileinrichtungen über Elektromagnetvorrichtungen fernsteuerbar. Zusätzlich sind bei bekannten Kompressoren zur Absicherung des maximalen Druckes im Entladedruckbereich, also im Hochdruckbereich, Druckbegrenzungseinrichtungen vorgesehen, die zum Beispiel durch Berstscheiben oder durch Druckbegrenzungsventile bei Überschreiten des maximalen Druckes im Entladedruckbereich das Kältemittel an die Umgebung abgeben. Speziell bei den dadurch zerstörten Berstscheiben ist nach einer derartigen Drucküberschreitung ein weiterer Betrieb des Kompressors nicht möglich. Bei den Druckbegrenzungsventilen wird auf jeden Fall ein Teil des in der Kälteanlage vorhandenen Kältemittels an die Umgebung abgegeben und dabei verloren.

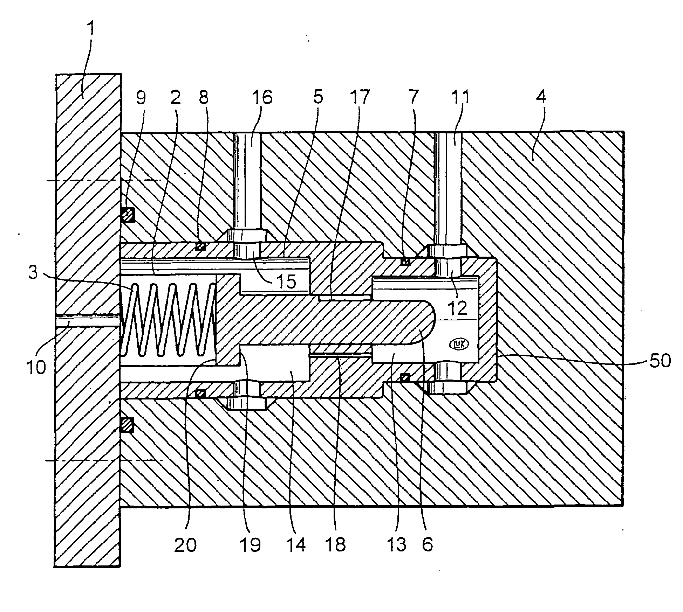

Im Stand der Technik zeigt das Dokument D1 (EP-A-0992746) ein Druckbegrenzungsventil, welches den Triebraumdruckbereich (PC) gegen den Saugdruckbereich (PS) absichert, wie in Figur 4 und Figur 5 dargestellt. Dieses Ventil benutzt den Atmosphärendruck als Referenzdruck.

Die Entgegenhaltung D2 (EP-A-0992747) zeigt in Figur 5 ein Druckbegrenzungsventil, welches den Hochdruck im Hochdruckbereich (PD) in den Triebraumdruckbereich (PC) entlastet kann, bei welchem aber der Federraum keine Verbindung zum Atmosphärendruck hat.

Die Entgegenhaltungen D3 bis D6 enthalten keine Druckbegrenzungsventile, sondern konventionelle Regelventile für Klimakompressoren, teilweise durch Elektromagnete vorgesteuert oder durch den Saugdruck angesteuert.

Aufgabe der Erfindung ist es, eine Sicherheitseinrichtung für die Druckbegrenzung eines Kompressors zu gestalten, die die vorgenannten Nachteile nicht aufweist.

Diese Aufgabe wird gelöst durch eine Sicherheitseinrichtung für die Druckbegrenzung eines hubvariablen bzw. verdrängungsvariablen Kompressors, bei dem die Neigung der Taumelscheibe bzw. der Schrägscheibe zumindest durch die Differenz zwischen Hochdruck im Entladedruckbereich und Triebraumdruck variiert wird, gegebenenfalls durch die Differenz zwischen Triebraumdruck und Saugdruck, mit einer Zufuhrverbindung zwischen Entladedruckbereich und Triebraumdruckbereich, mit einer Ventilvorrichtung, welche in der Zufuhrverbindung angeordnet ist, wobei die Ventilvorrichtung bei Überschreiten eines vorgegebenen maximalen Entladedrucks die Verbindung vom Entladedruckbereich zum Triebraumdruckbereich öffnet, mit ansteigendem Entladedruck den Querschnitt der Öffnung vergrößert und somit den Zustrom von Druckmittel vom Entladedruckbereich in den Triebraumdruckbereich erhöht, wobei der bewegliche Ventilkörper der Ventilvorrichtung vom Hochdruck im Entladedruckbereich gegen die Kraft einer Feder in Öffnungsrichtung der Verbindung verschoben wird, dadurch gekennzeichnet, dass die Druckwirkfläche im Federraum des Ventilkörpers mit Umgebungsdruck, wie Atmosphärendruck, beaufschlagt ist und eine Konstantdrossel, beispielsweise in Form einer Bohrung, eine zusätzliche Verbindung vom Hochdruckbereich zum Triebraumdruckbereich herstellt.

Dabei verkleinert beim Erhöhen des Zustroms vom Entladedruckbereich in den Triebraumdruckbereich und dem dadurch bedingten Anstieg des Triebraumdrucks die Taumelscheibe bzw. Schrägscheibe ihren Hub, so dass bei Ansprechen der Druckbegrenzung die Leistungsaufnahme des Kompressors verringert wird. Die Sicherheitseinrichtung ist als Ventilvorrichtung, insbesondere als Druckbegrenzungsventil, ausgestaltet. Erfindungsgemäß ist der bewegliche Ventilkörper der Ventileinrichtung vom Hochdruck im Entladedruckbereich unter anderem gegen die Kraft einer Feder in Öffnungsrichtung der Verbindung verschiebbar.

Bevorzugt ist die Druckwirkfläche im Federraum des Ventilkörpers mit Umgebungsdruck, wie Atmosphärendruck, beaufschlagbar. Eine erfindungsgemäße Ausführungsform der Ventileinrichtung enthält unter anderem folgende Bauteile: eine Abdeckung 1, einen Faltenbalg 2, eine Feder 3, einen Gehäuseteil 4, ein Ventilgehäuse 5, einen beweglichen Ventilkörper, nämlich den Kolben 6 und gegebenenfalls 3 O-Ringe Nr. 7, 8 und 9 oder in der Wirkung vergleichbare Dichtungseinrichtungen.

Bei einer weiteren Ausführungsform kann der vorgebbare Maximaldruck für die Druckbegrenzung zusätzlich durch einen äußeren Eingriff verändert werden, wie zum Beispiel durch eine Elektromagnetvorrichtung, eine elektrische Stellmotorvorrichtung, ein temperaturabhängiges Stellglied oder druckmittelbetätigte Stellzylinder.

Auch kann in einer weiteren Ausführungsform in der zusätzlichen Verbindung vom Entladedruckbereich zum Triebraumdruckbereich statt der zusätzlichen Drossel ein zusätzliches Ventil angeordnet sein.

Ein besonderer Vorteil der Erfindung ist, dass nach Ansprechen der Druckbegrenzung ein Weiterbetrieb des Verdichters möglich ist und kein Kühlmittel in die Umgebung abgegeben wird.

Eine weitere Ausführungsform zeichnet sich dadurch aus, dass der vorgebbare maximale Druck im wesentlichen durch einen Vergleich zwischen dem Druck im Entladedruckbereich, der Federkraft und dem Umgebungsdruck des Klimakompressors erreicht wird, gegebenenfalls unwesentlich durch den Druck im Triebraumdruckbereich.

Eine bevorzugte Ausführungsform der Sicherheitseinrichtung wird nun anhand der Figur beschrieben.

Die einzige Figur zeigt eine konstruktive Ausführung der Sicherheitseinrichtung.

In der Figur ist innerhalb eines Gehäuseteils 4, welches einen Teil eines Kompressorgehäuses darstellen kann, eine Ventilhülse 5 eingesetzt, die einen beweglichen Ventilkolben 6 enthält, der durch eine Feder 3 in Schließstellung gebracht ist. Der Federraum der Feder 3 wird durch einen hier vereinfacht dargestellten Faltenbalg 2, der zwischen dem Ventilkolben 6 und einem Deckel 1 angebracht ist, gegen den restlichen Ventilraum abgedichtet. Der Federraum der Feder 3 ist weiterhin über eine Öffnung 10 im Deckel 1 mit dem Umgebungsdruck außerhalb des Klimakompressors beaufschlagbar. Die Ventilhülse 5 wird durch O-Ring-Dichtungen 7 und 8 gegen den Gehäuseteil 4 abgedichtet. Selbstverständlich können auch andere Dichtungskonstruktionen hier eingesetzt werden. Der Deckel 1 ist ebenfalls durch eine Dichtung 9 gegenüber dem Gehäuseteil 4 abgedichtet. Eine Verbindung, hier in Form einer Bohrung dargestellt, führt vom Entladedruckbereich 11 des Kompressors, d. h. vom Hochdruckbereich, über eine oder mehrere Bohrungen 12 in der Ventilhülse 5 in einen Druckbereich 13, in dem der Hochdruck auf die rechte, in der Darstellung abgerundete Seite des Ventilkolbens 6 und damit auf dessen projizierbare Fläche in Richtung gegen die Federkraft wirken kann. Der Ventilkolben 6 dichtet in der dargestellten Form den Hochdruckraum 13 gegenüber einem zweiten Druckraum 14 ab. Der Druckraum 14 ist über eine oder mehrere Bohrungen 15 in der Ventilhülse 5 mit einer Leitung verbunden, die in den Druckbereich 16 des Triebraumes führt. Der Ventilkolben 6 kann zusätzlich eine Drosselkerbe 17 enthalten, die bei einer Öffnungsbewegung des Ventilkolbens 6 gegen die Federkraft der Feder 3 und gegen den Atmosphärendruck auf die Fläche 20 im Federraum eine gedrosselte Verbindung vom Raum 13 zum Raum 14 freigibt und mit zunehmendem Ventilkolbenhub, je nach Ausgestaltung der Drosselkerbe 17, eine konstante oder ansteigende Druckmittelmenge zwischen diesen beiden Räumen abströmen läßt. Parallel zum Ventilkolben 6 kann zwischen den beiden Druckräumen 13 und 14 eine Konstantdrossel 18 angeordnet sein, die dauernd eine gewisse Druckmittelmenge vom Raum 13 zum Raum 14 und damit vom Entladedruckbereich 11 des Kompressors zum Triebraumdruckbereich 16 des Kompressors abfließen läßt.

Die Funktion der Sicherheitseinrichtung ist wie folgt: Der Druck im Entladedruckbereich 11 des Kompressors, der sich auch im Druckraum 13 befindet und auf die rechte Seite des Kolbens 6 wirkt, wird mit den Kräften der Feder 3 sowie des Faltenbalgs 2 und der Druckkraft durch den Umgebungsdruck innerhalb des Federraums auf die Fläche 20 verglichen, wobei der Triebraumdruck im Raum 14 auf die Ringfläche 19 des Kolbens hier vernachlässigbar ist, wenn diese Ringfläche entsprechend klein gestaltet oder zu Null reduziert wird, so dass der Ventilkolben 6 nur einen Durchmesser hat. Dabei stellen im Wesentlichen die vorgegebene Federkraft und der Atmosphärendruck auf die Fläche 20 den Sollwert der Druckkraft dar, die den maximalen, zu begrenzenden Druck auf der rechten Seite des Kolbens 6 definiert. Da der Hochdruck im Kompressor direkt mit dem Atmosphärendruck und der Federkraft verglichen wird, ist diese Druckbegrenzung unabhängig von den anderen Drücken im Kompressor, wie zum Beispiel dem Saugdruck, also Drücken, die sich bei bekannten Kompressoren auf die dort bekannten Ventileinrichtungen auswirken. Sobald ein Überschreiten des maximalen Drucks den Kolben 6 nach links verschiebt und damit ein Überströmen aus dem Druckraum 13 in den Druckraum 14 möglich wird, wird zunächst der weitere Druckanstieg im Hochdruckbereich 11 des Kompressors begrenzt. Zusätzlich führt jetzt der in den Triebraumdruckbereich 16 abströmende Druckmittelstrom zu einer Druckerhöhung im Triebraum, die den Kompressor in eine Position zurückschwenken läßt, bei der der Hub der Kolben und die Neigung der Taumelscheibe bzw. der Schrägscheibe verkleinert bis minimiert wird, so dass auch der vom Kompressor erzeugte Druckmittelstrom reduziert wird und nicht zu einem weiteren Anstieg des Maximaldruckes im Entladedruckbereich 11 des Kompressors beitragen kann. Somit dient dieses Druckbegrenzungsventil 50 nicht nur zur Druckbegrenzung durch Ableiten eines Druckmittelstroms aus dem Entladedruckbereich 11, sondern auch zur Hubregelung durch Abströmen des überschüssigen Druckmittelstromes in den Triebraumdruckbereich 16 und zum Anheben des Triebraumdrucks. Zusätzlich ist bei den bekannten Kompressoren eine weitere Verbindung vom Triebraum zur Saugseite des Kompressors eingerichtet, durch die bei Bedarf der Triebraumdruck herunter geregelt werden kann. Entweder kann der Triebraum durch eine fest eingestellte Drossel zum Saugraum hin entlastet werden, oder der Triebraumdruck kann variabel durch ein verstellbares Ventil in dieser Verbindung zum Saugraum entlastet werden. Somit könnte über dieses Ventil beispielsweise zusätzlich der Hub des Kompressors für die anderen Betriebszustände geregelt werden, bei Erreichen des maximal zulässigen Druckes im Entladedruckbereich 11 greift dann das Druckbegrenzungsventil 50 zusätzlich ein.

Eine weitere Ausgestaltung des erfindungsgemäßen Druckbegrenzungsventils kann darin bestehen, dass der Ventilkolben 6 zusätzlich zur Federkraft mit einer fernsteuerbaren Kraftvorrichtung beaufschlagt wird, wie zum Beispiel durch einen Elektromagneten, der mit seiner Magnetkraft auf den Ventilkolben 6 schließend wirkt, oder durch eine elektrische Stellmotorvorrichtung oder einen druckmittelbetätigter Zylinder, der hydraulisch oder pneumatisch die Schließkraft auf den Druckbegrenzungsventilkolben 6 verändern kann, oder auch ein temperaturabhängiges Stellglied. Somit wäre der zu begrenzende Maximaldruck für den Kompressor fernsteuerbar einstellbar und entsprechend einem Regelprogramm der gesamten Klimaanlage den jeweiligen Betriebszuständen anpassbar. Vorteilhaft ist bei der Erfindung auf jeden Fall, dass der zu begrenzende Maximaldruck nicht überschritten wird, dass dieser zu begrenzende Maximaldruck durch Vergleich mit dem Umgebungsdruck, der Federkraft und der fernsteuerbaren Hilfskraft sicher einstellbar ist und dass im Falle der Druckbegrenzung der den Druckabbau bewirkende oder die Druckbegrenzung bewirkende Druckmittelstrom zusätzlich zum Zurückschwenken des Kompressors und zur Reduzierung der Kompressorleistung herangezogen wird.

Dadurch hat ein Kompressor mit einer erfindungsgemäßen Druckbegrenzungsventilvorrichtung die Möglichkeit, bei Erreichen des maximalen Druckes durch eine Zurücknahme des Schwenkwinkels seine eigene Kompressorleistung zu begrenzen und damit auch die Energieverschwendung bei Erreichen des maximalen zulässigen Druckes zu beeinflussen.

In einer weiteren Ausführungsform kann das Sicherheitsventil auch so ausgeführt werden, dass eine ständige Leckage vom Hochdruckbereich 11 in den Triebraumdruckbereich 16 einstellbar ist. Diese kann zum Beispiel durch das Spiel zwischen Kolben 6 und der Kolbenführung im Ventilgehäuse 5 oder eine eigens dafür angebrachte Drosselbohrung geführt werden, wie zum Beispiel durch die Bohrung 18 dargestellt. Dadurch kann eine separate Festdrossel zwischen Hochdruckseite und Triebraum im Kompressorgehäuse entfallen und auch die ständige Ölrückführung von der Hochdruckseite zum Triebraum realisiert werden, da sich das Schmieröl für den Kompressor als Zusatz im Druckmittelgas der Klimaanlage befindet. Auch kann das Druckbegrenzungsventil 50 als leckagefreies Sitzventil ausgeführt werden.

Der äußere Eingriff über eine zusätzliche fernsteuerbare Hilfskraft, der es erlaubt, den Ansprechdruck, bei dem das Ventil 50 zu öffnen beginnt, herauf- oder herabzusetzen, ermöglicht, dass der Kompressor zum Beispiel so betrieben wird, dass sein Entladedruck im Bereich des Ansprechdrucks liegt, so dass das beschriebene Ventil zur Regelung des Hubs verwendet werden kann. Für dieses Prinzip ist zusätzlich ein Schalt- oder Regelventil oder eine Festdrossel zwischen Triebraum und Saugseite notwendig.

## Patentansprüche

1. Sicherheitseinrichtung für die Druckbegrenzung eines hubvariablen, verdrängungsvariablen Kompressors, bei dem die Neigung der Taumelscheibe oder der Schrägscheibe durch die Differenz zwischen Hochdruck im Entladedruckbereich (11) und Triebraumdruck variiert wird als auch durch die Differenz zwischen Triebraumdruck und Saugdruck, mit einer Zufuhrverbindung zwischen Entladedruckbereich (11) und Triebraumdruckbereich (16), mit einer Ventilvorrichtung, welche in der Zufuhrverbindung angeordnet ist, wobei die Ventilvorrichtung bei Überschreiten eines vorgegebenen maximalen Entladedrucks die Verbindung vom Entladedruckbereich (11) zum Triebraumdruckbereich (16) öffnet, mit ansteigendem Entladedruck den Querschnitt der Öffnung vergrößert und somit den Zustrom von Druckmittel vom Entladedruckbereich (11) in den Triebraumdruckbereich (16) erhöht, wobei der bewegliche Ventilkörper (6) der Ventilvorrichtung vom Hochdruck im Entladedruckbereich (11) gegen die Kraft einer Feder (3) in Öffnungsrichtung der Verbindung verschoben wird, **dadurch gekennzeichnet, dass** die Druckwirkfläche (20) im Federraum des Ventilkörpers (6) mit Umgebungsdruck, wie Atmosphärendruck, beaufschlagt ist und eine Konstantdrossel, beispielsweise in Form einer Bohrung (18), eine zusätzliche Verbindung vom Hochdruckbereich (11) zum Triebraumdruckbereich (16) herstellt.

2. Sicherheitseinrichtung nach Anspruch 1, **dadurch gekennzeichnet, dass** beim Erhöhen des Zustroms vom Entladedruckbereich (11) in den Triebraumdruckbereich (16) die Taumelscheibe oder Schrägscheibe ihren Hub verkleinert.

3. Sicherheitseinrichtung nach Anspruch 1 oder 2, **dadurch gekennzeichnet, dass** die Ventilvorrichtung als Druckbegrenzungsventil ausgestaltet ist.

4. Sicherheitseinrichtung nach einem der vorhergehenden Ansprüche, **dadurch gekennzeichnet, dass** die Ventilvorrichtung unter anderem folgende Bauteile aufweist: eine Abdeckung 1, einen Faltenbalg 2, eine Feder 3, einen Gehäuseteil 4, ein Ventilgehäuse 5, einen beweglichen Ventilkörper, nämlich den Kolben 6, gegebenenfalls 3 O-Ringe Nr. 7, 8 und 9 oder in der Wirkung vergleichbare Dichtungseinrichtungen.

5. Sicherheitseinrichtung nach einem der vorhergehenden Ansprüche, **dadurch gekennzeichnet, dass** der vorgebbare Maximaldruck für die Druckbegrenzung zusätzlich durch einen äußeren Eingriff verändert werden kann, wie zum Beispiel durch eine Elektromagnetvorrichtung, eine elektrische Stellmotorvorrichtung, ein temperaturabhängiges Stellglied oder druckmittelbetätigte Stellzylinder.

6. Sicherheitseinrichtung nach einem der vorhergehenden Ansprüche, **dadurch gekennzeichnet, dass** die zusätzliche Verbindung vom Entladedruckbereich (11) zum Triebraumdruckbereich (16) statt durch die Konstantdrossel (18) durch ein zusätzliches Ventil oder durch Spiel zwischen dem Ventilkolben (6) und der Kolbenführung dargestellt ist.

7. Sicherheitseinrichtung nach einem der vorhergehenden Ansprüche, **dadurch gekennzeichnet, dass** nach Ansprechen der Druckbegrenzung ein Weiterbetrieb des Verdichters möglich ist.

8. Sicherheitseinrichtung nach einem der vorhergehenden Ansprüche, **dadurch gekennzeichnet, dass** der vorgebbare maximale Druck im wesentlichen durch einen Vergleich zwischen dem Druck im Entladedruckbereich (11), der Federkraft der Feder (3) und dem Umgebungsdruck über die Öffnung (10) des Klimakompressors erreicht wird, gegebenenfalls unwesentlich durch den Druck im Triebraumdruckbereich (16).

## Claims

1. Safety device for pressure limitation of a variable-stroke, variable-displacement compressor, in which the inclination of the wobble plate or swash plate is varied by the difference between high pressure in the discharge pressure area (11) and drive chamber pressure, as well as by the difference between drive chamber pressure and suction pressure, having a supply connection between discharge pressure area (11) and drive pressure chamber area (16), having a valve device which is situated in the supply connection, where the valve device opens the connection from the discharge pressure area (11) to the drive chamber pressure area (16), enlarges the cross section of the opening as the discharge pressure rises, and thus increases the inflow of pressure medium from the discharge pressure area (11) into the drive chamber pressure area (16), the movable valve body (6) of the valve device being moved by the high pressure in the discharge pressure area (11) against the force of a spring (3) in the opening direction of the connection, **characterized in that** the effective pressure area (20) in the spring chamber of the valve body (6) is charged with ambient pressure, such as environmental pressure, and a constant throttle valve, for example in the form of a bore (18), produces an additional connection from the high pressure area (11) to the drive chamber area (16).

2. Safety device according to Claim 1, **characterized in that** when the inflow from the discharge pressure area (11) into the drive chamber pressure area (16) is increased, the stroke of the wobble plate or swash plate is reduced.

3. Safety device according to Claim 1 or 2, **characterized in that** the valve device is designed as a pressure limiting valve.

4. Safety device according to one of the preceding claims, **characterized in that** the valve device includes the following components, among others: a cover 1, a bellows 2, a spring 3, a housing part 4, a valve housing 5, a movable valve body, namely the piston 6, if necessary 3 O-rings nos. 7, 8 and 9 or sealing devices with similar effect.

5. Safety device according to one of the preceding claims, **characterized in that** the pre-settable maximum pressure for the pressure limit can be changed in addition by an external intervention, such as for example by an electromagnet device, an electric positioning motor device, a temperature-dependent positioning element or control cylinders operated by the control medium.

6. Safety device according to one of the preceding claims, **characterized in that** the additional connection from the discharge pressure area (11) to the drive chamber pressure area (16) is represented by an additional valve or by play between the valve piston (6) and the piston guide, instead of by the constant throttle (18).

7. Safety device according to one of the preceding claims, **characterized in that** continuing operation of the compressor is possible after the pressure limitation responds.

8. Safety device according to one of the preceding claims, **characterized in that** the pre-settable maximum pressure is reached essentially by means of a comparison between the pressure in the discharge pressure area (11), the spring force of the spring (3) and the ambient pressure above the opening (10) of the air conditioner compressor, possibly insignificant due to the pressure in the drive chamber pressure area (16).

## Revendications

1. Dispositif de sécurité pour la limitation de la pression d'un compresseur à course et déplacement variables, dans lequel l'inclinaison du plateau cyclique ou du disque en mutation est modulée par la différence entre la haute pression dans la zone de pression de décharge (11) et la pression de la chambre de commande ainsi que par la différence entre la pression de la chambre de commande et la pression d'aspiration, comportant un raccord d'amenée entre la zone de pression de décharge (11) et la zone de la pression de la chambre de commande (16), comportant un dispositif à soupape, lequel est disposé dans le raccord d'amenée, sachant que le dispositif à soupape ouvre, en cas de dépassement d'une pression de décharge maximale prédéfinie, le raccord de la zone de pression de décharge (11) à la zone de pression de la chambre de commande (16), agrandit la section transversale de l'orifice avec l'augmentation de la pression de décharge et augmente ainsi l'afflux de fluide de pression de la zone de pression de décharge (11) à la zone de pression de la chambre de commande (16), sachant que le corps à soupape mobile (6) du dispositif à soupape est déplacé par la haute pression dans la zone de pression de décharge (11) contre la force d'un ressort (3) dans le sens d'ouverture du raccord, **caractérisé en ce que** la surface active de la pression (20) est alimentée, dans la chambre de ressort du corps à soupape (6), en pression ambiante, telle que la pression atmosphérique, et qu'un réducteur de débit non réglable, par exemple sous la forme d'un alésage (18), établit un raccord supplémentaire de la zone à haute pression (11) à la zone de pression de la chambre de commande (16).

2. Dispositif de sécurité selon la revendication 1, **caractérisé en ce que**, lors de l'augmentation de l'afflux de la zone de pression de décharge (11) à la zone de pression de la chambre de commande (16), le plateau cyclique ou le disque en mutation réduisent leur course.

3. Dispositif de sécurité selon la revendication 1 ou 2, **caractérisé en ce que** le dispositif à soupape est réalisé sous la forme de soupape de limitation de pression.

4. Dispositif de sécurité selon l'une quelconque des revendications précédentes, **caractérisé en ce que** le dispositif à soupape comporte entre autres les pièces suivantes : un couvercle 1, un soufflet 2, un ressort 3, une partie de boîtier 4, une boîte de soupapes 5, un corps de soupape mobile, à savoir le piston 6, le cas échéant trois anneaux toriques nos 7, 8 et 9 ou des dispositifs d'étanchéité à effet comparable.

5. Dispositif de sécurité selon l'une quelconque des revendications précédentes, **caractérisé en ce que** la pression maximale pouvant être prédéfinie, pour la limitation de la pression, peut être en outre modifiée par une intervention externe comme, par exemple, par un dispositif électromagnétique, un dispositif électrique à servomoteur, un actionneur thermodépendant ou un vérin de servocommande actionné par, un fluide de pression.

6. Dispositif de sécurité selon l'une quelconque des revendications précédentes, **caractérisé en ce que** le raccordement supplémentaire de la zone de pression de décharge (11) à la zone de pression de la chambre de commande (16) est représenté, au lieu de par le réducteur de débit non réglable (18), par une soupape supplémentaire ou par le jeu entre le piston de soupape (6) et la glissière du piston.

7. Dispositif de sécurité selon l'une quelconque des revendications précédentes, **caractérisé en ce que**, après le déclenchement de la limitation de la pression, il soit possible de continuer à faire marcher le compresseur.

8. Dispositif de sécurité selon l'une quelconque des revendications précédentes, **caractérisé en ce que** la pression maximale pouvant être définie peut être atteinte essentiellement par une comparaison entre la pression régnant dans la zone de pression de décharge (11), la force du ressort (3) et la pression ambiante par le biais de l'orifice (10) du compresseur de conditionnement d'air, le cas échéant, de manière négligeable, par la pression régnant dans la zone de pression de la chambre de commande (16).
